(19) Europäisches Patentamt / European Patent Office / Office européen des brevets

(11) **EP 3 367 548 A1**

(12) **EUROPEAN PATENT APPLICATION**

(43) Date of publication:
29.08.2018 Bulletin 2018/35

(51) Int Cl.:
H02M 1/32 (2007.01)          H02M 7/5387 (2007.01)
H02H 7/122 (2006.01)

(21) Application number: 18157392.4

(22) Date of filing: 19.02.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 23.02.2017 JP 2017032138

(71) Applicant: JTEKT Corporation
Osaka-shi, Osaka 542-8502 (JP)

(72) Inventors:
• MATSUHISA, Koichiro
Osaka-shi, Osaka 542-8502 (JP)
• SUMASU, Hiroshi
Osaka-shi, Osaka 542-8502 (JP)

(74) Representative: Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)

(54) **INVERTER CIRCUIT, MOTOR CONTROLLER, AND POWER STEERING SYSTEM**

(57) When supply of electric power to an inverter using a normally-ON switching element is abnormally stopped, a flow of a current to the switching element of the inverter is reduced. An inverter circuit (60) includes an inverter (40) having at least one arm including two normally-ON switching elements (T1, T2) connected in series between two lines (LI, L2) to which a voltage of a power supply (51) is applied, a smoothing capacitor (C1) connected between the two lines (LI, L2) at a position between the power supply (51) and the inverter (40), and a normally-OFF relay (T7) connected into the first line (LI) out of the two lines (LI, L2) at a position between the smoothing capacitor (CI) and the inverter (40).

FIG.1

**Description**

BACKGROUND OF THE INVENTION

1. Field of the Invention

The present invention relates to an inverter circuit, and also to a motor controller and a power steering system using the inverter circuit.

2. Description of the Related Art

Inverters are, for example, used for controlling motors. The inverter converts direct current (DC) power from a power supply into an alternating current (AC), and supplies the alternating current to a motor. A smoothing capacitor is provided between the inverter and the power supply. In this structure, if the power supply and the inverter are disconnected from each other due to an abnormal situation caused by an external impact or the like, an electric charge of the smoothing capacitor is preferably discharged promptly.

Japanese Patent Application Publication No. 2013-112055 (JP 2013-112055 A) discloses a power supply device in which, when an external impact is applied, power supply to a motor is interrupted and an electric charge accumulated in a smoothing capacitor is discharged. This power supply device includes an inverter, a series circuit, and a joining portion. The series circuit includes a relay and a resistor connected in parallel to the smoothing capacitor and also connected in series to each other. The joining portion is arranged on a line of a DC bus bar connecting the power supply and the inverter to each other. When a predetermined external force is applied, the joining portion interrupts conduction of the DC bus bar and closes the relay to discharge the electric charge of the smoothing capacitor.

Japanese Patent Application Publication No. 2003-348856 (JP 2003-348856 A) discloses a power supply device including a smoothing capacitor and an inverter. This power supply device includes a driver configured to simultaneously turn ON switching transistors of an arm of at least one phase of the inverter. In this structure, when a DC voltage is interrupted, an arm short-circuit current is caused to flow through the switching transistors that are turned ON by the driver, thereby consuming an electric charge accumulated in the smoothing capacitor.

Japanese Patent Application Publication No. 2011-234507 (JP 2011-234507 A) describes a power conversion device including an inverter circuit, driver circuits configured to drive the inverter circuit, and a voltage smoothing capacitor. The inverter circuit is connected to a DC power supply via an openable and closable contactor. This power conversion device further includes a discharge circuit and a driver power supply circuit. The discharge circuit is constituted by a resistor for discharging an electric charge of the voltage smoothing capacitor, and a discharging switching element connected in series to the resistor. The discharge circuit is connected in parallel to the voltage smoothing capacitor. The driver power supply circuit is connected in parallel to the voltage smoothing capacitor, receives an input of a voltage applied to the voltage smoothing capacitor, and supplies electric power to the driver circuits. When the contactor is open, discharge is performed by the discharge circuit and by the driver power supply circuit and the driver circuits supplied with the electric power from the driver power supply circuit.

In the structure described in JP 2013-112055 A, the joining portion disconnecting mechanism is constituted by a plurality of conductors and a plurality of insulators. Therefore, the structure of the joining portion is complicated. In the technologies described in JP 2003-348856 A and JP 2011-234507 A, the circuit structure for discharging the electric charge of the smoothing capacitor is simplified.

In the related-art structures described above, however, when the switching element of the arm of the inverter is a normally-ON switching element, an excessive through-current may flow through the switching element of the arm due to a residual electric charge of the capacitor in the event of an abnormal stop of the supply of electric power.

SUMMARY OF THE INVENTION

It is one object of the present invention to provide an inverter circuit in which, when supply of electric power to an inverter using a normally-ON switching element is abnormally stopped, a flow of a current to the switching element of the inverter can be reduced, and also provide a motor controller and a power steering system using the inverter circuit.

An inverter circuit according to one aspect of the present invention includes an inverter, a smoothing capacitor, and a normally-OFF relay. The inverter has at least one arm including two normally-ON switching elements connected in series between two lines to which a voltage of a power supply is applied. The smoothing capacitor is connected between the two lines at a position between the power supply and the inverter. The normally-OFF relay is connected into one of the two lines at a position between the smoothing capacitor and the inverter.

According to the aspect described above, when the supply of electric power to the inverter using the normally-ON switching element is abnormally stopped, the flow of a current to the switching element of the inverter can be reduced.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a block diagram illustrating an example of the structure of an inverter circuit;
FIG. 2 is a graph illustrating frequency characteristics of parasitic inductances L of an electrolytic capacitor and a ceramic capacitor;
FIG. 3 is an equivalent circuit diagram of a case where a capacitor is connected to a switching element;
FIG. 4 is a graph illustrating an example of a waveform of a current that flows when the electrolytic capacitor is connected to the switching element;
FIG. 5 is a graph illustrating an example of a waveform of a current that flows when the ceramic capacitor is connected to the switching element; and
FIG. 6 is a block diagram illustrating an example of the structure of a power steering system.

DETAILED DESCRIPTION OF EMBODIMENTS

(First Structure)

An inverter circuit according to a first structure of an embodiment of the present invention includes an inverter, a smoothing capacitor, and a normally-OFF relay. The inverter has at least one arm including two normally-ON switching elements connected in series between two lines to which a voltage of a power supply is applied. The smoothing capacitor is connected between the two lines at a position between the power supply and the inverter. The normally-OFF relay is connected into one of the two lines at a position between the smoothing capacitor and the inverter.
According to the first structure, the normally-OFF relay is provided on the line located between the normally-ON switching element of the arm of the inverter and the smoothing capacitor. When electric power from the power supply is stopped, the normally-OFF relay is turned OFF. That is, the relay interrupts conduction between the normally-ON switching element of the arm of the inverter and the smoothing capacitor. This reduces a flow of a current of an electric charge of the smoothing capacitor to the normally-ON switching element of the arm of the inverter. When the supply of electric power to the inverter is abnormally stopped, a flow of a residual electric charge of the smoothing capacitor to the switching element of the inverter is reduced.

(Second Structure)

In the first structure, the inverter circuit may further include a ceramic capacitor connected between the two lines at a position between the smoothing capacitor and the inverter. The ceramic capacitor can reduce a surge voltage that may flow through the switching element of the inverter.

(Third Structure)

In the second structure, the normally-OFF relay may be connected into one of the two lines at a position between the smoothing capacitor and the ceramic capacitor. When the relay is arranged between the smoothing capacitor and the switching element of the inverter, a parasitic inductance may increase, and a surge current may increase. When the relay is arranged on the line connecting the power supply and the inverter to each other at the position between the smoothing capacitor and the ceramic capacitor as in the third structure, the effect of reducing the surge current by the ceramic capacitor is further enhanced.

(Fourth Structure)

The embodiment of the present invention encompasses a motor controller (fourth structure) including the inverter circuit of any one of the first structure to the third structure. In the motor controller, a node between the two normally-ON switching elements of the arm of the inverter is connected to a motor.

(Fifth Structure)

The embodiment of the present invention encompasses a power steering system (fifth structure) configured to apply a steering assist force to a steering mechanism of a vehicle. The power steering system of the fifth structure includes the motor controller of the fourth structure, and the motor to be controlled by the motor controller to apply the steering assist force to the steering mechanism.

The embodiment of the present invention is described below with reference to the drawings. In the drawings, the same and corresponding components are represented by the same reference symbols, and the same description is not repeated. In the drawings, the components may be illustrated simply or schematically, or the illustration may be omitted partially for convenience of the description.

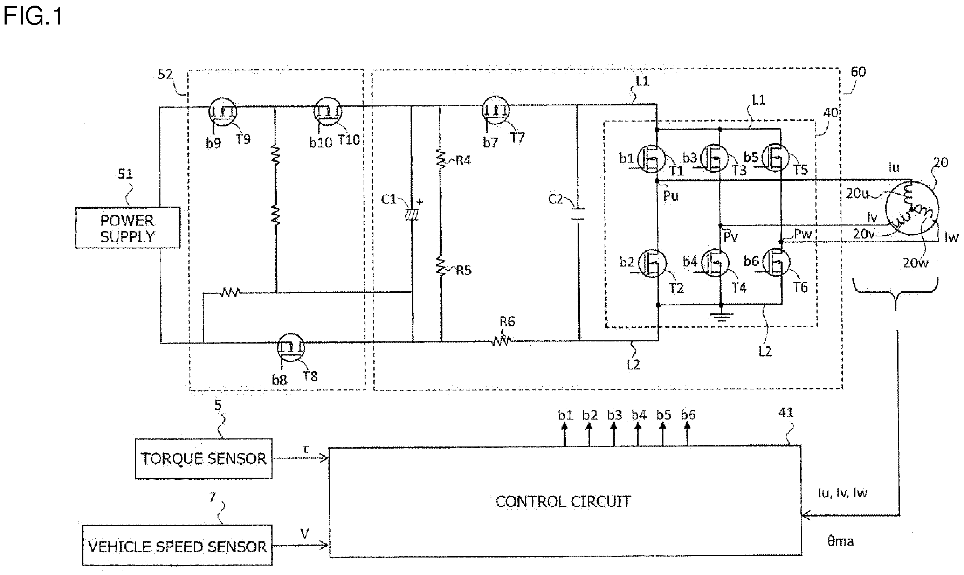

FIG. 1 is a block diagram illustrating an example of the structure of an inverter circuit of this embodiment. For example, an inverter circuit 60 illustrated in FIG. 1 supplies electric power to a motor of a power steering system. In the example illustrated in FIG. 1, the inverter circuit 60 is a power conversion circuit configured to convert DC power supplied from a power supply 51 (for example, a battery) into three-phase alternating currents, and supply the three-phase alternating currents to a motor 20. The inverter circuit 60 is connected between the power supply 51 and the motor 20.

In the example of FIG. 1, a power supply relay circuit 52 is provided between the power supply 51 and the inverter circuit 60. The power supply relay circuit 52 is turned OFF when the supply of electric power from the power supply 51 is stopped. When the power supply relay circuit 52 is turned OFF, the power supply 51 and the inverter circuit 60 are electrically disconnected from each other.

The inverter circuit 60 includes an inverter 40, a smoothing capacitor C1, a ceramic capacitor C2, a relay T7, and resistors R4, R5, and R6. The inverter circuit 60 is connected to two lines L1 and L2 to which a voltage of the power supply 51 is applied. In this example, the power supply 51 is a battery. In the example illustrated in FIG. 1, the two lines L1 and L2 are respectively connected to a positive terminal and a negative terminal of the battery that is the power supply 51. In this example, the first line L1 out of the two lines is a positive bus bar, and the second line L2 is a negative bus bar. Further, the first line L1 out of the two lines is also referred to as a power supply line, and the second line L2 is also referred to as a ground line.

(Inverter)

The inverter 40 has three arms connected in series between the two lines L1 and L2. Each arm includes two normally-ON switching elements ((T1, T2), (T3, T4), or (T5, T6)) connected in series. Specifically, each arm of the inverter 40 illustrated in FIG. 1 includes an upper-stage switching element T1, T3, or T5 connected to the positive bus bar, and a lower-stage switching element T2, T4, or T6 connected to the negative bus bar. The upper-stage switching element T1, T3, or T5 is also referred to as a high-side transistor, and the lower-stage switching element T2, T4, or T6 is also referred to as a low-side transistor.

The two switching elements ((T1, T2), (T3, T4), or (T5, T6)) connected in series in each arm constitute a bridge circuit corresponding to a U phase, a V phase, or a W phase. That is, bridge circuits as many as the number of phases are connected in parallel.

In each arm, a node (may be referred to as a middle point or a connection point) Pu, Pv, or Pw between the upper-stage switching element T1, T3, or T5 and the lower-stage switching element T2, T4, or T6 is connected to a coil 20u, 20v, or 20w of the U phase, the V phase, or the W phase of the motor 20 as an output terminal of each phase.

In the pair of switching elements (T1 and T2, T3 and T4, or T5 and T6) of each node, a drain of the upper-stage switching element T1, T3, or T5 is connected to the line L1 on the positive terminal side of the power supply 51, a gate is connected to a terminal to which a control signal b1, b3, or b5 of a control circuit 41 is input, and a source is connected to the node Pu, Pv, or Pw. Each node Pu, Pv, or Pw is connected to a drain of the lower-stage switching element T2, T4, or T6 and the coil 20u, 20v, or 20w of each phase of the motor 20. A gate of the lower-stage switching element T2, T4, or T6 is connected to a terminal to which a control signal b2, b4, or b6 is input, and a source is connected to the line L2 (ground) on the negative terminal side of the power supply 51.

The control signals b1 to b6 are supplied from the control circuit 41. Voltages in accordance with the control signals b1 to b6 from the control circuit 41 are respectively applied to the gates of the switching elements T1 to T6 of the inverter 40. Although illustration is omitted in FIG. 1, drivers may be provided so as to respectively apply the voltages in accordance with the control signals b1 to b6 to the gates of the switching elements T1 to T6. For example, a first voltage or a second voltage is selectively applied to each of the gates of the switching elements T1 to T6. The second voltage is higher than the first voltage. When the voltage of each of the gates of the switching elements T1 to T6 is switched between the first voltage and the second voltage, each of the switching elements T1 to T6 is switched ON and OFF. In this case, a driver (not illustrated) may be provided for each of the switching elements T1 to T6 so as to switch the first voltage and the second voltage to be applied to each of the gates of the switching elements T1 to T6 in accordance with the control signal.

Each of the normally-ON switching elements T1 to T6 may be, for example, formed of a semiconductor transistor. For example, each of the switching elements T1 to T6 may be formed of a field-effect transistor (FET) such as a metal-oxide semiconductor field-effect transistor (MOSFET) or a bipolar transistor such as an insulated-gate bipolar transistor (IGBT). The transistor (T1 to T6) of the normally-ON inverter illustrated in FIG. 1 may be, for example, an n-channel depletion type MOSFET. A normally-OFF transistor (T7 to T10) may be, for example, an enhancement type MOSFET.

(Smoothing Capacitor)

At a position between the power supply 51 and the inverter 40, the smoothing capacitor C1 is connected between the two lines L1 and L2 to which the voltage of the power supply 51 is applied. That is, the smoothing capacitor C1 is connected between the two lines L1 and L2 in parallel to the inverter 40. For example, the smoothing capacitor C1 is an electrolytic capacitor. The smoothing capacitor C1 smooths the DC voltage supplied from the power supply 51. The smoothing capacitor C1 stabilizes the voltage to be supplied from the power supply 51 to the inverter 40. For example, when the voltage supplied from the power supply 51 varies due to a connected load, the variation range can be narrowed.

(Normally-OFF Relay)

The normally-OFF relay T7 is connected into (is serially embedded into) the first line L1 out of the two lines L1 and L2 at a position between the smoothing capacitor C1 and the inverter 40. That is, the relay T7 is provided between the smoothing capacitor C1 and the inverter 40. For example, the relay T7 may be constituted by a semiconductor transistor such as an FET. When the electric power is not supplied, the normally-OFF relay T7 is turned OFF to interrupt conduction of the line L1. When the relay T7 is constituted by an FET, conduction between a source and a drain is turned OFF at a gate voltage of 0. When the gate voltage is higher than a threshold voltage, the conduction between the source and the drain is turned ON. In this case, the drain and the source of the relay T7 are connected in series to the line L1. In this example, the drain of the relay T7 is connected to the power supply 51, and the source is connected to the inverter 40.
The relay T7 is not limited to the semiconductor transistor. For example, the relay T7 may be a semiconductor switching element other than the transistor, or may be a relay with a contact, which opens and closes the contact mechanically.
In the example illustrated in FIG. 1, the gate voltage of the relay T7 is supplied from the power supply 51. When the supply from the power supply 51 is stopped, the gate voltage of the relay T7 becomes zero, so that the conduction of the line L1 is interrupted. For example, when an abnormality occurs in the power supply 51 and the power supply relay circuit 52 is turned OFF, the supply of electric power from the power supply is stopped. In this case, the relay T7 is also turned OFF, so that the conduction of the line L1 is interrupted. Therefore, the smoothing capacitor C1 and each of the upper-stage switching elements T1, T3, and T5 of the inverter 40 are electrically disconnected from each other. Thus, when the electric power from the power supply 51 is stopped, an electric charge of the smoothing capacitor C1 does not flow through each of the switching elements T1 to T6 of the inverter 40. As described above, the normally-OFF relay T7 is provided between the smoothing capacitor C1 and each of the upper-stage switching elements T1, T3, and T5 of the inverter 40. Thus, when the supply of electric power is abnormally stopped, the flow of a current from the smoothing capacitor C1 to each of the switching elements T1 to T6 can be reduced without providing a complicated circuit.

(Ceramic Capacitor)

At a position between the smoothing capacitor C1 and the inverter 40, the ceramic capacitor C2 is connected between the two lines L1 and L2. The ceramic capacitor C2 is connected in parallel to the smoothing capacitor C1 and each arm of the inverter 40. Specifically, the ceramic capacitor C2 is connected between the drain of the upper-stage switching element T1, T3, or T5 and the source of the lower-stage switching element T2, T4, or T6 of each arm of the inverter 40. No other element is connected in parallel between each of the arms (T1 to T6) of the inverter and the ceramic capacitor C2. That is, the ceramic capacitor C2 is arranged on a closest parallel arm out of the arms (T1 to T6) of the inverter.
The relay T7 is connected into the first line L1 (positive bus bar) out of the two lines L1 and L2 at a position between the smoothing capacitor C1 and the ceramic capacitor C2. That is, the relay T7 is arranged on the line L1 connecting the power supply 51 and the inverter 40 to each other and also between the smoothing capacitor C1 and the ceramic capacitor C2. Therefore, even when the relay T7 disconnects the line L1, the ceramic capacitor C2 remains connected to the switching elements T1 to T6 of the arms of the inverter.
The ceramic capacitor C2 reduces surge voltages of the switching elements T1 to T6. The surge voltages of the switching elements T1 to T6 are generated when the paths of the currents flowing through the switching elements T1 to T6 are changed. For example, the surge voltage ($\Delta V$) can be calculated based on the following expression (1).

$$\Delta V = -L \times (di / dt) \qquad (1)$$

L: parasitic inductance, di: current change amount, dt: temporal change amount

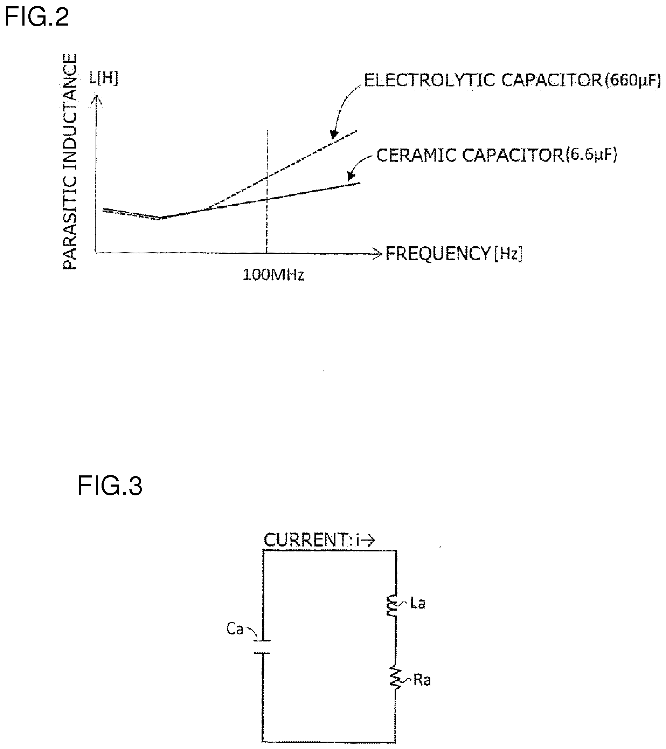

FIG. 2 is a graph illustrating frequency characteristics of the parasitic inductances L of the electrolytic capacitor and the ceramic capacitor. The capacity of the electrolytic capacitor illustrated in FIG. 2 is 660 μF, and the capacity of the ceramic capacitor is 6.6 μF. In the example illustrated in FIG. 2, the parasitic inductance L of the ceramic capacitor is smaller than that of the electrolytic capacitor in a frequency band of the surge voltage (100 MHz). When the ceramic capacitor having a small value of the parasitic inductance L in the frequency band of the surge voltage is arranged on the closest parallel arm of the switching elements T1 to T6, the surge voltages can be reduced more efficiently.

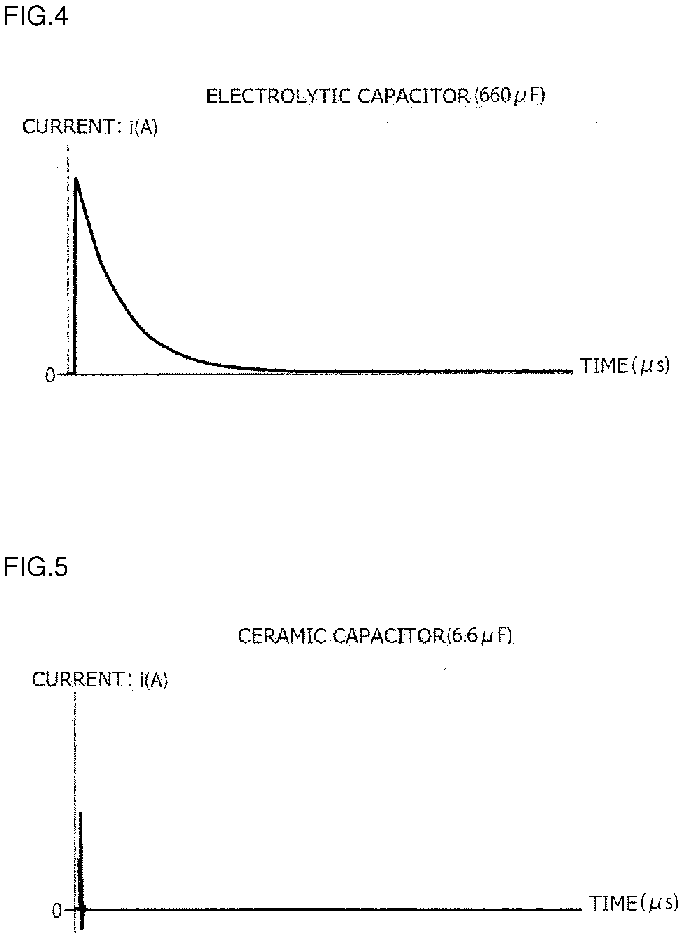

FIG. 4 is a graph illustrating an example of a waveform of a current that flows when the electrolytic capacitor having the capacity of 660 μF is connected to the switching element. FIG. 5 is a graph illustrating an example of a waveform of a current that flows when the ceramic capacitor having the capacity of 6.6 μF is connected to the switching element. The current waveforms illustrated in FIG. 4 and FIG. 5 are substantially the same as a waveform of a current i in an equivalent circuit illustrated in FIG. 3. In the equivalent circuit illustrated in FIG. 3, an inductor La and a resistor Ra are connected in series to a capacitor Ca.

The current flowing through the switching element from the ceramic capacitor illustrated in FIG. 5 is smaller than the current flowing through the switching element from the electrolytic capacitor illustrated in FIG. 4. Thus, in the structure of the inverter circuit 60 illustrated in FIG. 1, it is understood that the current when the electric charge of the ceramic capacitor C2 flows through the switching element T1 of the inverter 40 is smaller than the current when the electric charge of the smoothing capacitor C1 flows through the switching element T1 of the inverter 40. In the structure of FIG. 1, the relay T7 is arranged between the ceramic capacitor C2 and the smoothing capacitor C1. Therefore, when the supply of electric power from the power supply 51 is stopped and the power supply relay circuit 52 and the relay T7 are turned OFF, the smoothing capacitor C1 and each of the switching elements T1 to T6 of the inverter 40 are disconnected from each other, but the ceramic capacitor C2 and each of the switching elements T1 to T6 are electrically connected to each other. Thus, the electric charge of the ceramic capacitor C2 flows through each of the switching elements T1 to T6 as a current. Since this current is small, influence of the current on each of the switching elements T1 to T6 is small as well.

As in the example illustrated in FIG. 2, FIG. 4, and FIG. 5, the capacity of the ceramic capacitor C2 can be set to about 1% (one hundredth) of the capacity of the smoothing capacitor C1 that is the electrolytic capacitor. Thus, the capacity of the ceramic capacitor C2 is preferably smaller than the capacity of the smoothing capacitor C1. For example, the capacity of the ceramic capacitor C2 can be set to several percent of the capacity of the smoothing capacitor C1.

Referring back to FIG. 1, at positions between the relay T7 and the smoothing capacitor C1, two resistors R4 and R5 are connected in series between the two lines L1 and L2. The two resistors R4 and R5 connected in series are connected in parallel to the smoothing capacitor C1. The resistors R4 and R5 are configured to discharge a residual electric charge of the smoothing capacitor C1 when the power supply relay circuit 52 and the relay T7 are turned OFF. The resistors R4 and R5 may be arranged between the smoothing capacitor C1 and the power supply relay circuit 52. That is, the resistors can be connected between the relay T7 and the power supply 51 in parallel to the smoothing capacitor C1. Thus, when the supply of electric power from the power supply 51 is stopped, the electric charge of the smoothing capacitor C1 can be discharged to the resistors.

In the example illustrated in FIG. 1, a shunt resistor R6 is connected in series to the line L2 that is the negative bus bar (ground side) out of the two lines L1 and L2.

The power supply relay circuit 52 includes the two power supply relays T9 and T10 connected in series into the first line L1 (positive bus bar) out of the two lines L1 and L2, and the power supply relay T8 connected into the second line L2 (negative bus bar).

When the supply of electric power from the power supply 51 is stopped, the power supply relays T8, T9, and T10 are turned OFF. Thus, the two lines L1 and L2 connecting the power supply 51 and the inverter circuit 60 to each other are disconnected. That is, the power supply 51 and the inverter circuit 60 are electrically disconnected from each other.

The inverter circuit 60 illustrated in FIG. 1 is included in a motor controller 4. FIG. 1 also illustrates an example of the structure of the motor controller 4. The motor controller 4 includes the inverter circuit 60 and the control circuit 41.

(Control Circuit)

By switching the switching elements T1 to T6 described above, the DC voltage supplied from the power supply 51 is converted into three-phase (U-phase, V-phase, and W-phase) AC voltages. The three-phase AC voltages obtained through the conversion are supplied to the coils 20u to 20w of the respective phases of the motor 20 via the nodes Pu, Pv, and Pw, so that the motor 20 rotates.

Specifically, the control circuit 41 outputs pulse width modulation (PWM) drive signals to the switching elements T1 to T6 as the control signals, thereby driving the inverter 40 through PWM. ON/OFF states (conduction states) of the pairs of switching elements (T1 and T2, T3 and T4, and T5 and T6) corresponding to the U phase, the V phase, and the W phase are controlled by the pairs of PWM drive signals (b1 and b2, b3 and b4, and b5 and b6) corresponding to the respective phases. The pair of PWM drive signals of each phase have an inverse relationship. Therefore, the voltages obtained at the nodes Pu, Pv, and Pw of the respective phases are applied to the motor 20 as a U-phase voltage, a V-phase voltage, and a W-phase voltage. Thus, a U-phase current, a V-phase current, and a W-phase current are supplied to the motor 20.

Current sensors (not illustrated) may be provided so as to detect current values Iu to Iw of the respective phases on power supply lines between the nodes Pu, Pv, and Pw and the motor 20. The control circuit 41 acquires information on the detected current values Iu to Iw of the respective phases. Further, the control circuit 41 acquires a steering torque $\tau$ from a torque sensor 5, a vehicle speed V from a vehicle speed sensor 7, and a rotation angle $\theta$ma from a rotation angle sensor 6.

The control circuit 41 receives the phase current values Iu to Iw, the steering torque $\tau$, the vehicle speed V, and the rotation angle $\theta$ma of the motor, and generates control signals based on those factors. For example, the control circuit 41 generates voltage command values Vu*, Vv*, and Vw* of the respective phases of the motor 20 based on the steering torque $\tau$, the vehicle speed V, the rotation angle $\theta$ma, and the phase current values Iu to Iw. The control circuit 41 generates the PWM drive signals b1, b3, and b5 and their negation signals b2, b4, and b6 as the control signals based on the voltage command values Vu*, Vv*, and Vw*.

As a specific example, the control circuit 41 determines a target value It of a current to be caused to flow through the motor 20 based on the steering torque $\tau$ and the vehicle speed V, and calculates a difference between a q-axis component of the target value It of the current and a q-axis component of a current detection value obtained based on the phase current values Iu to Iw, and a difference between a d-axis component of the target value It of the current and a d-axis component of the current detection value obtained based on the phase current values Iu to Iw. In order to eliminate those differences, the control circuit 41 calculates voltages to be applied to the motor 20 as the voltage command values Vu*, Vv*, and Vw*. Thus, the control circuit 41 drives the motor 20 through current feedback control.

In place of the specific example described above, the control circuit 41 may calculate the voltage command values Vu*, Vv*, and Vw* in accordance with a motor circuit equation based on the target value It and the rotation angle $\theta$ma of the motor 20. At this time, parameters used in the motor circuit equation are corrected based on a current detection value Im. In this case, the current detection value Im can be detected based on, for example, a voltage applied at both ends of a current detection resistor that is provided in the inverter 40 illustrated in FIG. 1. The current detection resistor may be inserted between each of the lower-stage switching elements T2, T4, and T6 and the ground (negative terminal of the DC power supply).

The control circuit 41 may estimate a rotation angle $\theta$m of the motor 20 by using detection values of the voltages of the respective phases, and calculate the voltage command values Vu*, Vv*, and Vw* by using the rotation angle $\theta$m. The control circuit 41 may detect an abnormality of the inverter 40 or each of the switching elements T1 to T6 based on the detection values of the voltages of the respective phases. In this case, the inverter 40 is provided with a circuit configured to detect the voltages of the respective phases.

(Example of Structure of Power Steering System)

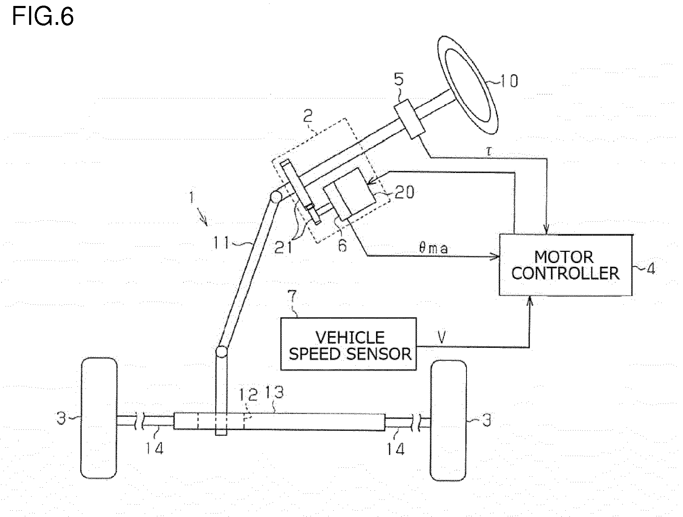

The motor controller 4 illustrated in FIG. 1 can be used for controlling the motor of the power steering system. FIG. 6 is a block diagram illustrating an example of the structure of the power steering system. The power steering system illustrated in FIG. 6 includes a steering mechanism 1 and an assist mechanism 2. The steering mechanism 1 turns steered wheels 3 based on a driver's operation for a steering wheel 10. The assist mechanism 2 assists the driver's steering operation.

The steering mechanism 1 includes a steering shaft 11 and a rack shaft 13. The steering shaft 11 serves as a rotation shaft of the steering wheel 10. The rack shaft 13 is coupled to the lower end of the steering shaft 11 via a rack and pinion mechanism 12. Tie rods 14 are coupled to both ends of the rack shaft 13. The steered wheels 3 are respectively coupled to the tie rods 14. In the steering mechanism 1, when the steering shaft 11 rotates along with a driver's operation for the steering wheel 10, the rotational motion is converted into an axial reciprocating linear motion of the rack shaft 13 via the rack and pinion mechanism 12. The reciprocating linear motion of the rack shaft 13 is transmitted to the steered wheels 3 via the tie rods 14 coupled to both ends of the rack shaft 13. Thus, the steered angles of the steered wheels 3 are changed, so that the traveling direction of the vehicle is changed.

The assist mechanism 2 includes the motor 20 configured to apply an assist torque to the steering shaft 11. The motor 20 is a three-phase brushless motor. Rotation of the motor 20 is transmitted to the steering shaft 11 via a gear mechanism 21, so that a motor torque is applied to the steering shaft 11. Thus, the steering operation is assisted.

The power steering system is provided with various sensors configured to detect an operation amount of the steering wheel 10 and a condition amount of the vehicle. For example, the steering shaft 11 is provided with the torque sensor (torque detector) 5 configured to detect the torque (steering torque) $\tau$ applied to the steering shaft 11 during a driver's steering operation. The motor 20 is provided with the rotation angle sensor 6 configured to detect the rotation angle (electrical angle) θma of the motor 20. The vehicle is provided with the vehicle speed sensor 7 configured to detect the vehicle speed (traveling speed) V of the vehicle. The motor controller 4 acquires outputs from the sensors 5 to 7. The motor controller 4 controls the drive of the motor 20 based on the outputs from the sensors 5 to 7.

(Modified Examples of Inverter Circuit)

The structure of the inverter circuit is not limited to that of the example illustrated in FIG. 1. For example, the relay T7 may be provided on the line L1 between the ceramic capacitor C2 and the inverter 40. The ceramic capacitor C2 may be omitted. The resistors R4 and R5 may be omitted. Other elements may be added to the inverter circuit 60 illustrated in FIG. 1.

(Other Modified Examples)

The power supply 51 is not limited to the battery. For example, AC power supplied from an AC power supply may be converted into DC power, and the DC power may be supplied to the inverter circuit.
In the example described above, the normally-OFF relay T7 is connected into the first line L1, that is, the positive bus bar (power supply line) out of the two lines to which the voltage of the power supply is applied. The normally-OFF relay T7 may be connected into the second line L2, that is, the negative bus bar (ground line) out of the two lines. The normally-OFF relay T7 may be connected into each of the two lines L1 and L2.
The inverter of the present invention is not limited to the inverter to be used for controlling the motor. For example, the inverter of the present invention is applicable to an inverter of a converter that is connected to a battery and is configured to convert DC power of the battery into an alternating current and output the alternating current. The motor controller of the present invention is not limited to the motor controller to be used in the power steering system. For example, the present invention is applicable to controllers for consumer motors such as motors of home appliances, industrial motors, and any other motors.
The motor to be controlled by the motor controller of the present invention is not limited to the three-phase brushless motor of the example described above. For example, the present invention is also applicable to motor controllers for driving other types of electric motor such as a brushless motor having phases other than three phases or a brushed motor.
The present invention is not limited to the column assist type electric power steering system described above, and is also applicable to other types of electric power steering system such as a pinion assist type or rack assist type electric power steering system. The present invention is also applicable to motor controllers other than the motor controller for the electric power steering system.

**Claims**

1.  An inverter circuit, comprising:

    an inverter having at least one arm including two normally-ON switching elements connected in series between two lines to which a voltage of a power supply is applied;
    a smoothing capacitor connected between the two lines at a position between the power supply and the inverter; and
    a normally-OFF relay connected into one of the two lines at a position between the smoothing capacitor and the inverter.

2.  The inverter circuit according to claim 1, further comprising a ceramic capacitor connected between the two lines at a position between the smoothing capacitor and the inverter.

3.  The inverter circuit according to claim 2, wherein the normally-OFF relay is connected into one of the two lines at a position between the smoothing capacitor and the ceramic capacitor.

4.  A motor controller, comprising the inverter circuit according to any one of claims 1 to 3, wherein a node between the two normally-ON switching elements of the arm of the inverter is connected to a motor.

5.  A power steering system configured to apply a steering assist force to a steering mechanism of a vehicle, the power steering system comprising:

EP 3 367 548 A1

the motor controller according to claim 4; and
the motor to be controlled by the motor controller to apply the steering assist force to the steering mechanism.

**9**

FIG.1

FIG.2

FIG.3

FIG.4

ELECTROLYTIC CAPACITOR (660μF)

CURRENT: i(A)

0                                                    TIME(μs)

FIG.5

CERAMIC CAPACITOR(6.6μF)

CURRENT: i(A)

0                                                    TIME(μs)

FIG.6

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 943 474 A1 (SCHNEIDER TOSHIBA INVERTER [FR]) 24 September 2010 (2010-09-24) * page 4, line 19 - page 5, line 6; figure 1 * * page 6, line 4 - line 10; claim 1 * | 1-5 | INV. H02M1/32 H02M7/5387 H02H7/122 |
| X | EP 2 858 221 A1 (ABB OY [FI]) 8 April 2015 (2015-04-08) * paragraphs [0002], [0013], [0018]; figure 3 * | 1-5 | |
| X | US 2014/009096 A1 (IMANAKA AKIRA [JP] ET AL) 9 January 2014 (2014-01-09) * paragraph [0067]; figure 2 * | 1-5 | |
| X | WO 2007/020419 A1 (TRW LTD [GB]; MCLEAN ANDREW [GB]; BOLTON JOHN ANTHONY [GB]) 22 February 2007 (2007-02-22) * page 2, line 28 - page 3, line 7; claim 1 * | 1-5 | |
| A | US 2014/055887 A1 (URYU NOBUHIKO [JP] ET AL) 27 February 2014 (2014-02-27) * paragraph [0040] - paragraph [0041]; figure 2 * | 2,3 | TECHNICAL FIELDS SEARCHED (IPC) H02M H02H |

The present search report has been drawn up for all claims

| Place of search | Date of completion of the search | Examiner |
|---|---|---|
| The Hague | 20 June 2018 | Imbernon, Lisa |

EPO FORM 1503 03.82 (P04C01)

**ANNEX TO THE EUROPEAN SEARCH REPORT
ON EUROPEAN PATENT APPLICATION NO.**

EP 18 15 7392

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2018

| Patent document cited in search report | | Publication date | Patent family member(s) | | | Publication date |
|---|---|---|---|---|---|---|
| FR 2943474 | A1 | 24-09-2010 | NONE | | | |
| EP 2858221 | A1 | 08-04-2015 | NONE | | | |
| US 2014009096 | A1 | 09-01-2014 | CN | 103534916 | A | 22-01-2014 |
| | | | JP | 5752234 | B2 | 22-07-2015 |
| | | | JP | WO2012120567 | A1 | 07-07-2014 |
| | | | US | 2014009096 | A1 | 09-01-2014 |
| | | | WO | 2012120567 | A1 | 13-09-2012 |
| WO 2007020419 | A1 | 22-02-2007 | CN | 101243589 | A | 13-08-2008 |
| | | | EP | 1915807 | A1 | 30-04-2008 |
| | | | US | 2009218967 | A1 | 03-09-2009 |
| | | | WO | 2007020419 | A1 | 22-02-2007 |
| US 2014055887 | A1 | 27-02-2014 | CN | 103633922 | A | 12-03-2014 |
| | | | JP | 5660090 | B2 | 28-01-2015 |
| | | | JP | 2014045578 | A | 13-03-2014 |
| | | | US | 2014055887 | A1 | 27-02-2014 |

EPO FORM P0459

For more details about this annex : see Official Journal of the European Patent Office, No. 12/82

**REFERENCES CITED IN THE DESCRIPTION**

**Patent documents cited in the description**

- JP 2013112055 A
- JP 2003348856 A
- JP 2011234507 A